# EUROPEAN PATENT SPECIFICATION

(11) **EP 2 721 294 B1**
(45) Date of publication and mention of the grant of the patent: **18.11.2015**
(21) Application number: 12728132.7
(22) Date of filing: 05.06.2012
(51) Int. Cl.: F03D 9/00, F03D 11/02, F03D 7/02

(54) **METHOD OF SYNCHRONISING A GENERATOR DRIVE WITH AN ALTERNATING CURRENT ELECTRICAL NETWORK**
VERFAHREN ZUM SYNCHRONISIEREN EINES GENERATORANTRIEBS MIT EINEM ELEKTRISCHEN WECHSELSTROMNETZ
PROCÉDÉ DE SYNCHRONISATION D'UN DISPOSITIF D'ENTRAÎNEMENT DE GÉNÉRATEUR AVEC UN RÉSEAU ÉLECTRIQUE À COURANT ALTERNATIF

(43) Date of publication of application: 23.04.2014
(73) Proprietor: Mitsubishi Heavy Industries, Ltd., Tokyo 108-8215 (JP)
(72) Inventor: CALDWELL, Niall, Midlothian Lothian EH20 9TB (GB); DUMNOV, Daniil, Midlothian Lothian EH20 9TB (GB); ABRAHAMS, Daniel, Midlothian Lothian EH20 9TB (GB)
(74) Representative: Hindle, Alistair Andrew
(86) International application number: PCT/JP2012/003669
(87) International publication number: WO 2013/183081

(56) References cited:
- WO-A1-2007/053036
- WO-A2-2008/113699
- US-A- 4 280 061
- US-A1- 2007 024 058
- US-A1- 2009 273 186
- US-A1- 2012 104 752

## Description

### Technical Field

The invention concerns generator drives which employ a variable displacement hydraulic motor coupled to an electrical generator to provide electrical power to an alternating current electrical network. The invention is useful in various applications, including wind turbine generators having a hydraulic transmission, and other types of energy generation devices for generating power from a renewable energy source.

### Background Art

Before an electrical generator can be connected to an alternating current electrical network, in order to provide power to the electrical network, the electrical generator needs to be synchronised so that the electrical output from the electrical generator has the same frequency and phase as the electrical network.

At the beginning of a synchronisation procedure, an electrical generator is isolated from the electrical network, for example using a contactor, which is initially in an open circuit position. The frequency and phase of the electrical generator is gradually brought into synchrony with the electrical network and the contactor is closed. The contactor may, for example, be an automatic device which closes when it is determined that the frequency and phase of the electrical generator output and the electrical grid are the same, within a predetermined tolerance. This process can be monitored using a device referred to as a synchroscope which analyses relative frequency and phase difference.

It is known to synchronise a generator using an automatic synchroniser which determines phase and frequency differences and issues signals indicating that the speed of rotation of an electrical generator shaft should be increased or decreased as appropriate to match phase and frequency. However, this process is generally slow, often taking many minutes.

It is also known to synchronise a generator by running the generator at a frequency greater than that of the electrical network and gradually lowering the frequency by allowing the generator to spin down until it matches the frequency of the electrical generator. Again, this procedure is effective but can be slow, particularly in the case of electrical generators for use in large machines such as power generating apparatus of a renewable energy type (e.g. wind turbine generators), where it is desirable to respond rapidly to changes in electricity demand.

Accordingly, the invention addresses the technical problem of providing a generator drive capable of rapidly synchronising an electrical generator with an alternating current electrical network.

Some embodiments of the invention concern methods of synchronising a generator drive using a hydraulic motor which is itself part of a hydraulic transmission, particularly a hydraulic transmission which is part of a power generation device of a renewable energy type (e.g. a wind turbine generator) in which the transmission includes a hydraulic pump which is driven by a renewable energy source (e.g. wind) and a pressurised fluid line which communicates pressurised fluid from the hydraulic pump to the hydraulic motor. It can be difficult to start up such devices. For example, it is necessary to build up a certain pressure in the pressurised fluid line to drive the hydraulic motor to in turn start up the generator. This requires the pump to operate, driven by the renewable energy source (e.g. via the blades of a wind turbine generator). However, when the hydraulic motor starts to operate, the pressure in the pressurised fluid line can drop rapidly due to the pressurised fluid displaced by the hydraulic motor. This makes it difficult to control the output torque of the hydraulic motor and can lead to stalling (when the pressurised fluid line pressure drops too low), a risk of damaging the machine due to excessive pressure in the pressurised fluid line, and the possibility of feedback loops making it difficult for the device to function conectly.

Accordingly, some embodiments of the invention address the problem of starting up power generation devices, including but not limited to wind turbine generators, which employ a hydraulic transmission.

US2012/0104752 relates to a wind turbine generator or a tidal current generator comprising: a hub; a main shaft which is coupled to the hub; a generator which converts rotation energy transmitted from the main shaft to electric power; a hydraulic pump of variable displacement type which is driven by the main shaft; a hydraulic motor of variable displacement type which is connected to the generator; a high pressure oil line which is arranged between a discharge side of the hydraulic pump and an intake side of the hydraulic motor; a low pressure oil line which is arranged between an intake side of the hydraulic pump and a discharge side of the hydraulic motor; and a control unit in communication with a pump controller and a motor controller, the pump controller adjusting a displacement Dp of the hydraulic pump, the motor controller adjusting a displacement D*ₘ* of the hydraulic motor, wherein the pump controller sets a target torque of the hydraulic pump, and then sets the displacement D*ₚ* of the hydraulic pump based on the target torque and a pressure of operating oil in the high pressure oil line, and wherein the motor controller sets the displacement D*ₘ* of the hydraulic motor based on a discharge amount Q*ₚ* of the hydraulic pump so that a rotation speed of the generator becomes constant, the discharge amount Q*ₚ* of the hydraulic pump being obtained from the displacement D*ₚ*. The wind turbine generator or the tidal current generator may comprise a grid state determination unit with determines a state of a grid which is synchronized with the generator, wherein, when the grid state determination unit determines that a voltage of the grid has decreased, the motor controller ramps down the displacement D*ₘ* of the hydraulic motor to an amount required for keeping the generator synchronized with the grid in a few milliseconds.

US 2007/0024058A1 relates to wind turbine system which includes a variable blade assembly which turns a hydraulic pump, which pressurizes fluid and stores the pressurized fluid in a chamber in the support tower. Pressurized fluid is directed via an electronically controllable proportioning valve to a hydraulic motor which is coupled to an electric generator. A computer control module operates the proportioning valve regulating pressure to the hydraulic motor, maintaining generator rotational speed, and providing consistent output frequency to the power grid.

### Summary of Invention

According to a first aspect of the invention there is provided a method of synchronising a generator drive with an alternating current electrical network, the generator drive comprising a hydraulic motor coupled to a generator having an electrical output for providing electrical power to an alternating current electrical network having a load frequency, load phase and load voltage, the hydraulic motor having a hydraulic input coupled to a source of pressurised hydraulic fluid and one or more working chambers of cyclically varying volume for receiving and depressurising discrete portions of received hydraulic fluid, the volume of pressurised hydraulic fluid received by each working chamber being selectable for each cycle of working chamber volume, said generator drive comprising a controller which selects the volume of the pressurised hydraulic fluid which is received by each working chamber on each cycle of working chamber volume to thereby drive the generator, the generator initially being electrically isolated from the electrical network;
the method comprising the step carried out by the controller of receiving a load signal representative of the load frequency and controlling the volume of pressurised fluid received and depressurised by the working chambers on each cycle of working chamber volume to match the frequency of the electrical output of the generator with the load frequency to within a tolerance and then subsequently bringing the electrical output of the generator into electrical communication with the electrical network to thereby provide power to the electrical network.

As the volume of pressurised hydraulic fluid received by each working chamber is selectable for each cycle of working chamber volume, the rate of displacement of the hydraulic motor, and therefore the torque which it exerts on the generator, can be varied very quickly. This enables the frequency of the electrical output of the generator to be rapidly matched to the frequency of the electrical network.

Typically, the hydraulic motor comprises a rotatable shaft and the cycles of working chamber volume are coupled to the angle of the rotatable shaft. Typically, the generator has a rotor and stator and a generator drive shaft which drives the rotor. The rotatable shaft of the hydraulic motor is coupled to the generator drive shaft. Although in principle the hydraulic motor shaft could be coupled to the generator shaft through a gear so that the hydraulic motor shaft and generator shaft rotate at different, but coupled, frequencies, it is preferred that the hydraulic motor shaft and the generator shaft are coupled with a gearing ratio of unity and so rotate together.

In some embodiments, matching the frequency of the electrical output of the generator with the load frequency will comprise synchronising the frequency of cycles of working chamber volume with the load frequency. However, even if the hydraulic motor rotatable shaft and generator shaft are coupled with a gearing ratio of unity, there may be circumstances where the frequencies are different, for example, if the hydraulic motor has a multi-lobe ring cam, meaning that there are a plurality of cycles of working chamber volume for each rotation of the hydraulic motor rotatable shaft, or if the generator is not a two pole generator (which has one voltage cycle per rotation of the generator shaft) but instead has a greater number of poles, e.g. 4, 6 or 8 (in which case there are 2, 3 or 4 voltage cycles per rotation of the generator shaft respectively). Accordingly the ratio of the frequency of cycles of working chamber volume to the frequency of the electrical output from the generator is typically a fixed ratio.

Typically, the hydraulic motor comprises a fluid outlet through which depressurised fluid is displaced and a plurality of electronically controlled valves which regulate the flow of hydraulic liquid between the working chambers and the hydraulic input and the fluid outlet, wherein the controller controls the electronically controlled valves on each cycle of working chamber volume to thereby select the net volume of pressurised hydraulic fluid which is received by each working chamber volume on each cycle of working chamber volume. The electronically controlled valves are typically actuated in phased relationship with cycles of working chamber volume. The hydraulic motor typically comprises a shaft position sensor to determine the angular position of the rotatable shaft and thereby the phase of cycles of working chamber volume. Such machines are known from EP 0 494 236 and EP 1 537 333. The controller may be distributed. For example, it may comprise one or more modules which calculate the desired displacement and one or more modules which control valve actuation to obtain the desired displacement.

The electricity network may be a nationwide electricity network. The electricity network may be a local electricity network. The electricity network may provide electrical power to a building.

The controller can typically select the volume of pressurised fluid which is received by each working chamber from at least two possible values. The possible values typically include receiving no net displacement of hydraulic fluid (an idle cycle) and receiving a discrete portion of pressurised hydraulic fluid (an active cycle). Idle and active cycles may be interspersed to match a desired net displacement. In some embodiment, the volume of the discrete portions of pressure hydraulic fluid can be selected from a range of volumes, for example, by controlling the phase of actuation of electronically controlled valves relative to cycles of working chamber volume.

The controller typically receives a pressure signal indicative of the instantaneous pressure of pressurised fluid received from the source of pressurised fluid and takes the pressure signal into account when selecting the volume of pressurised hydraulic fluid received by each working chamber for each cycle of working chamber volume.

This is important because the torque exerted by the hydraulic motor on the generator shaft is a function of (typically proportional to) the pressure of the received pressurised fluid because the pressure of pressurised fluid received from the source of pressurised fluid can drop when the rate of displacement of hydraulic fluid by the hydraulic motor is increased. This can be especially rapid where the hydraulic motor is part of a hydraulic transmission and the source of pressurised fluid is a hydraulic pump and pressurised fluid line which extends from an output of the hydraulic pump to an input of the hydraulic motor. Even if the pressurised fluid line is in fluid communication with an accumulator or other variable volume pressurised fluid store, the action of removing hydraulic fluid from the pressurised fluid line will reduce the pressure in the pressurised fluid line.

By taking the instantaneous pressure into account throughout the synchronisation process, the rate of rotation of the rotatable shaft of the hydraulic motor can be more carefully controlled and the synchronisation procedure can be quicker than would otherwise be the case.

The method may comprise receiving a phase signal representative of the load phase and controlling the volume of pressurised fluid received and depressurised by the working chambers on each cycle of working chamber volume to regulate the phase of cycles of working chamber volume to match the phase of the electrical output of the generator with the load phase to within a tolerance before the electrical output of the generator is brought into electrical communication with the electrical network to thereby provide power to the electrical network.

Again, as the volume of pressurised hydraulic fluid received by each working chamber is selectable for each cycle of working chamber volume and so the displacement of the hydraulic motor, and therefore the torque which it exerts on the generator, can be varied very quickly, the phase of the electrical output of the generator can be rapidly matched with the load phase.

The load signal and phase signal may be received as the frequency and phase components of an alternating current electrical signal. The method may comprise measuring the frequency of a received alternating current electrical signal to provide the load signal and analysing the phase of the received alternating current electrical signal to obtain the phase signal (for example, by comparing it with the phase of a reference signal, such as a generated reference signal, or the electrical output of the generator or a signal representative of the phase of the hydraulic motor rotatable shaft). The phase signal representative of the load phase may be a signal representative of the difference between the phase of the electricity network and the phase of the electrical output of the generator.

The method may comprise controlling the volume of pressurised fluid received and depressurised by the working chambers on each cycle of working chamber volume to first match the frequency of the electrical output of the generator with the load frequency and then to also match the phase of the electrical output of the generator with the load phase before the electrical output of the generator is brought into electrical communication with the electrical network to thereby provide power to the electrical network.

It may be that the electrical output of the generator is electrically coupled to the electrical network through a contactor and the contactor is initially open to isolate the electrical output of the generator from the electrical network and wherein the step of bringing the electrical output of the generator into electrical communication with the electrical network to thereby provide power to the electrical network comprises closing the contactor.

Typically, the contractor is closed once both the frequency and phase of the electrical output of the generator are matched with the electrical network to within the said tolerances. An automatic contractor controller may be provided which measured the frequency and phase of both the output of the electrical generator and the electrical network and closes the contactor once the frequency and phase of the electrical output of the generator and the electrical network are within the said tolerances. The said tolerances are generally small, for example the frequency tolerance is typically 1% or less; the phase tolerance is typically 15 degrees or less.

Typically, the hydraulic motor comprises a rotatable shaft and the cycles of working chamber volume are coupled to the angle of the rotatable shaft, wherein the method comprises matching the frequency of the electrical output of the generator with the load frequency by controlling the volume of pressurised fluid received and depressurised by the working chambers to increase the speed of rotation of the rotatable shaft (and also to decrease the speed of rotation where required, e.g. during phase matching or normal operation after synchronisation).

Typically, the method comprises increasing the speed of rotation to converge on the speed required to match the frequency of the electrical output of the generator with the load frequency, without exceeding the speed required to match the frequency of the electrical output of the generator until the frequency of the electrical output of the generator has been found to match the load frequency to within the tolerance. This contrasts with some known method of synchronising an electrical generator in which the speed of rotation of the electrical generator rotor is increased to a speed which is above the speed required to match the frequency of the electrical output of the generator with the load frequency and then allowed to gradually decrease to converge towards the required speed. However, by increasing the speed of rotation to converge on the required speed, without overshoot, the synchronising process can be made substantially quicker. The speed of rotation of the rotatable shaft can then be slightly increased or decreased to match the phase of the electrical output of the generator with the electricity network.

Typically, the generator is driven by the hydraulic motor continuously throughout the synchronisation process. Typically the rotatable shaft of the hydraulic motor and generator shaft rotate in fixed relation to each other throughout the synchronisation process. This allows more rapid synchronisation to known methods in which a generator shaft is brought up to a speed so that the frequency of the electrical output of the generator exceeds the load frequency and the generator shaft is decoupled to allow the frequency of the electrical output of the generator to decrease gradually until it matched the frequency of the electrical network.

The method may be started responsive to receipt of a start signal through a start signal input.

Prior to receive the start signal, the hydraulic motor may be functioning with low or no net displacement of hydraulic fluid.

The method may further comprise controlling the potential difference across one or more field coils of the generator responsive to the load frequency or load voltage. Typically, the voltage of the electrical output of the generator is matched to the load voltage. This can be achieved by controlling the rotor coil voltage, which affects the stator coil voltage. The stator coil voltage typically is the load voltage.

Typically, the source of pressurised hydraulic fluid is a pressurised fluid line connected to one or more of a hydraulic fluid store, a hydraulic pump or a hydraulic ram.

The generator drive may be part of a hydraulic transmission in a power generating device of a renewable energy type, the power generating device having an actuated element (such as a rotor with one or more blades) which is actuated by energy from a renewable energy source, the hydraulic transmission further comprising a hydraulic pump which has a rotatable shaft coupled to the actuated element (e.g. rotor) and which uses renewable energy received through the actuated element (e.g. rotor) and rotatable shaft to pressurise hydraulic fluid and output the pressurised hydraulic fluid to a pressurised fluid line which extends from an output of the hydraulic pump to an input of the hydraulic motor, the hydraulic pump and pressurised fluid line thereby functioning as the source of pressurised hydraulic fluid. The electrical output of the generator may be coupled to an alternating current electrical network having a load frequency, load phase and load voltage.

The invention extends in a second aspect to a method of starting up a said power generating device, the method of starting up a said power generating device comprising the step of the hydraulic pump receiving energy from the rotor and increasing the pressure of fluid in the pressurised fluid line and then synchronising the generator with the electrical network.

The controller typically receives a pressure signal indicative of the instantaneous pressure of pressurised fluid received from the source of pressurised fluid and takes the pressure signal into account when selecting the volume of pressurised hydraulic fluid received by each working chamber of the hydraulic motor for each cycle of working chamber volume. As described above, this is especially helpful in circumstances such as the start-up of a power generating device including a hydraulic transmission, as the hydraulic motor removes pressurised fluid from the pressurised fluid line when it starts to operate, causing the pressure to drop and meaning that if the motor received pressurised hydraulic fluid at a constant rate, the torque generated by the motor would decrease. Thus, despite changes in pressurised fluid line pressure, the motor can synchronise the generator rapidly with the electrical network.

Typically, the method of starting up a said power generating device comprises varying the pitch of the blades to increase the take up of power from the renewable energy source (e.g. wind or flowing water). Typically, the pitch of the blades is regulated to maintain a steady speed of rotor rotation, for example by a pitch controller. Typically, the speed of rotator rotation is maintained substantially constant during synchronisation.

Typically, the rate of displacement of the hydraulic pump is controlled to maintain the pressure in the high pressure line within a pressure range during the start up procedure. Typically, the rate of displacement of the hydraulic pump is controlled to increase the pressure in the high pressure line to at least a threshold pressure and then the pitch of the blades is altered to reduce the torque acting on the rotor blades. Typically, the hydraulic motor starts to increase the speed of rotation of the motor rotatable shaft and thereby increase the frequency of the electrical output of the generator only after the pressure in the high pressure line has exceeded a threshold.

Thus, while the generator drive synchronises the frequency (and typically also phase) of the output of the electrical generator with the electricity grid, the rate of displacement of the hydraulic pump is regulated (e.g. to increase the pressure in the pressurised fluid line to above a threshold and/or to keep the pressure in the pressurised fluid line within a range of pressures) and the pitch of the blades is regulated (e.g. to start providing energy to the hydraulic motor and/or to restrict the torque of the blades to avoid excessive pressure in the pressurised fluid line).

The invention extends in a second aspect to a computer readable medium (such as an optical or magnetic disc, RAM, ROM, EPROM, EEPROM or solid state memory) storing program code which, when executed on a computer causes the computer to function as the controller of the generator drive of the first aspect of the invention.

In a third aspect of the invention there is provided a generator drive comprising a hydraulic motor coupled to a generator having an electrical output for providing electrical power to an alternating current electrical network having a load frequency, load phase and load voltage, the hydraulic motor having a hydraulic input coupled to a source of pressurised hydraulic fluid and one or more working chambers of cyclically varying volume for receiving and depressurising discrete portions of received hydraulic fluid, the volume of pressurised hydraulic fluid received by each working chamber being selectable for each cycle of working chamber volume, said generator drive comprising a controller which selects the volume of the pressurised hydraulic fluid which is received by each working chamber on each cycle of working chamber volume to thereby drive the generator, wherein the generator drive controller is configured (e.g. programmed) to cause the generator drive to synchronise the electrical output of the generator with the electrical network and to bring the electrical output of the generator into electrical communication with the electrical network by the method of the first aspect of the invention.

In a fourth aspect of the invention there is provided a power generating apparatus of a renewable energy type comprising a generator drive according to the third aspect of the invention.

Features described above in relation to the first aspect of the invention are also optional features of the second, third and fourth aspects of the invention.

### Brief Description of Drawings

An example embodiment of the present invention will now be illustrated with reference to the following Figures in which:
[fig.1]Figure 1 shows a wind turbine generator connected to an electricity network and implementing the invention;
[fig.2]Figure 2 shows a hydraulic motor for use in the wind turbine generator of Figure 1;
[fig.3]Figure 3 is a flow chart of steps in a synchronisation procedure according to the present invention;
[fig.4]Figure 4 is a graph showing the variation in hydraulic motor working chamber cycle frequency, motor and generator torque and phase error during the synchronisation procedure of Figure 3;
[fig.5]Figure 5 is a schematic diagram of control logic for a controller of a generator drive according to the invention; and
[fig.6]Figure 6 is a diagram of the variations in the speed of rotation of a wind turbine motor, the pressure in the pressurised fluid line and the rate of displacement of hydraulic fluid by the hydraulic motor during start-up of a wind turbine generator.

### Description of Embodiments

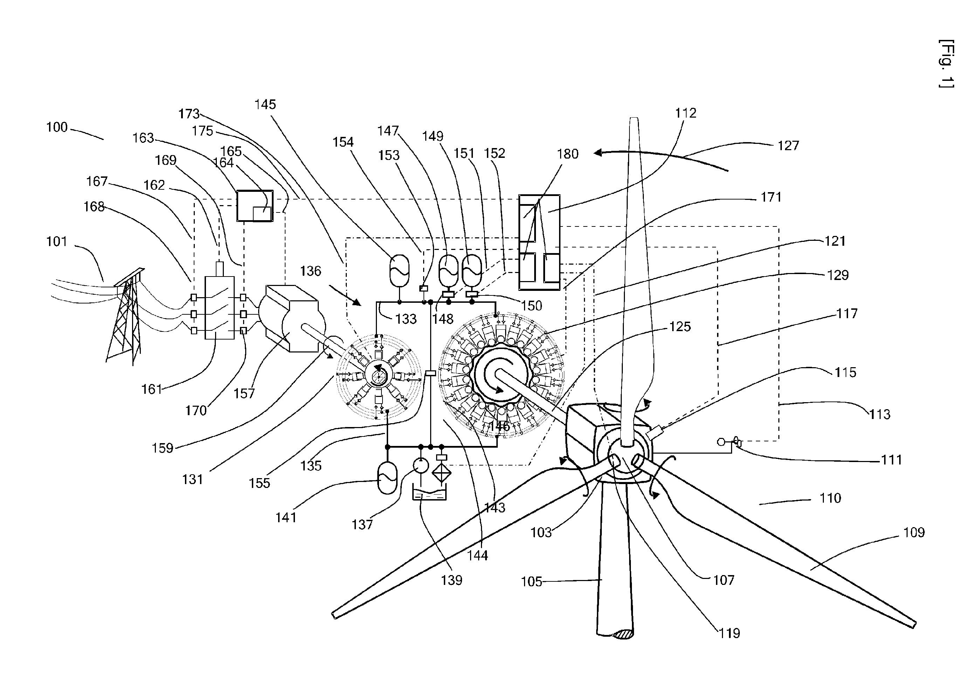

Figure 1 illustrates an example embodiment of the invention used in a Wind Turbine Generator (WTG, 100) to provide power to an electricity network (101). The WTG comprises a nacelle (103) rotatably mounted to a tower (105) and having mounted thereon a hub (107) supporting three blades (109) known collectively as a rotor (110). An anemometer (111) attached externally to the nacelle provides a measured wind speed signal (113) to a controller (112). A rotor speed sensor (115) at the nacelle provides the controller with a rotor speed signal (117, acting as the current rotation rate of the rotatable shaft). In the example system the angle of attack of each of the blades to the wind can be varied by a pitch actuator (119), which exchanges pitch actuation signals and pitch sensing signals (121) with the controller.

The hub is connected directly to a pump (129), through a rotor shaft (125), which rotates in the direction of rotor rotation (127). The pump is typically a variable displacement hydraulic pump comprising a plurality of working chambers of cyclically varying volume, and electronic valves which are actively controlled on each cycle of working chamber volume to determine whether each working chamber undergoes an idle cycle, in which there is no net pumping, or an active cycle in which a discrete portion of hydraulic fluid is pressurised and introduced into a pressurised fluid line (133). Thus, the displacement of the pump can be continuously varied to optimise the receipt of energy from the wind while managing other constraints, such as maintaining the pressure in the pressurised fluid line within a preferred range.

The pressurised fluid line, which functions as the source of pressurised hydraulic fluid, is also fluidically connected to a hydraulic motor (131). A low pressure manifold (135) returns depressurised hydraulic fluid from the hydraulic motor to the pump. Thus, the pump, hydraulic motor, low pressure manifold and pressurised fluid line and related components together form a hydraulic transmission (136).

The hydraulic motor is connected to a synchronous electrical generator (157) (the generator), through a generator shaft (159) which is coupled to the rotatable shaft (208) of the hydraulic motor. In this example, the rotatable shaft of the hydraulic motor and the generator shaft are coupled with 1:1 gearing although alternative gearing ratios are possible. The electrical generator (157), hydraulic motor (131), generator shaft (159) and rotatable shaft (208) function along with the controller (112) as the generator drive.

The electrical generator is connected to an electricity network through a contactor (161), which receives a contactor control signal (162) from a generator and contactor controller (163) and is operable to selectively connect the generator to or isolate the generator from the electricity network. When the contactor connects the generator to the electricity network, the generator is coupled to the electricity network without an intervening frequency-conversion circuit which would otherwise reduce the efficiency of electricity generation.

The hydraulic pump and motor are controlled by a controller (112) which generates hydraulic pump and hydraulic motor control signals (e.g. electronic valve control signals) to thereby regulate the displacement of the hydraulic pump and the hydraulic motor. The controller is typically a microprocessor or microcontroller, which executes a stored program in use, although some or all of the function of the controller can be implemented as electronic circuits. The controller can take the form of a plurality of microprocessors or microcontrollers which may be distributed and which individually carry out a subset of the overall function of the controller.

A charge pump (137) continuously draws fluid from a reservoir (139) into the low pressure manifold, which is connected to a low pressure accumulator (141). A low pressure relief valve (143) returns fluid from the low pressure manifold to the reservoir through a heat exchanger (144) which is operable to influence the temperature of the working fluid and is controllable by the controller via a heat exchanger control line (146). A smoothing accumulator (145) is connected to the pressurised fluid line between the pump and the hydraulic motor. A first high pressure accumulator (147) and a second high pressure accumulator (149) are connected to the pressurised fluid line through a first isolating valve (148) and a second isolating valve (150) respectively. The first and second high pressure accumulators may have different precharge pressures. The states of the first and second isolating valves are set by the controller through first (151) and second (152) isolating valve signals respectively.

Fluid pressure in the pressurised fluid line is measured with a pressure sensor (153), which provides the controller with a pressurised fluid line pressure signal (154) enabling the pressure of the hydraulic fluid received by the hydraulic motor to be determined. As the torque exerted on the generator shaft by the hydraulic motor and the torque exerted on the rotor blades by the hydraulic motor are both proportional to the pressure in the pressurised fluid line, the pressurised fluid line pressure is taken into account by the controller when determining the rate of displacement of hydraulic fluid by the pump and motor. A high pressure relief valve (155) connects the high pressure and low pressure manifolds, to prevent excessive pressurised fluid line pressure.

During normal operation of the wind turbine generator, the generator and contactor controller receives measurements of the instantaneous voltage, current and frequency of the electricity supply (167) and the electrical output of the generator (169), measured by electricity supply sensors (168) and generator output sensors (170) respectively. These measurements are communicate to the controller (112) which controls the output of the generator by adjusting generator field current control signals (165) in accordance with generator and contactor control signals (175) from the controller. The generator and contactor controller includes a module which functions as a power factor controller (164) which matches the power factor of the output from the generator to the requirements of the network, for example by regulating the field current of the electrical generator.

The pump and motor report the instantaneous angular position and speed of rotation of their respective shafts, and the temperature and pressure of the hydraulic fluid in the pressurised fluid line, to the controller, and the controller selects the volume of working fluid to be displaced by each working chamber of the hydraulic motor and hydraulic pump on each cycle of working chamber volume and sends appropriate pump actuation signals (171) and motor actuation signals (173).

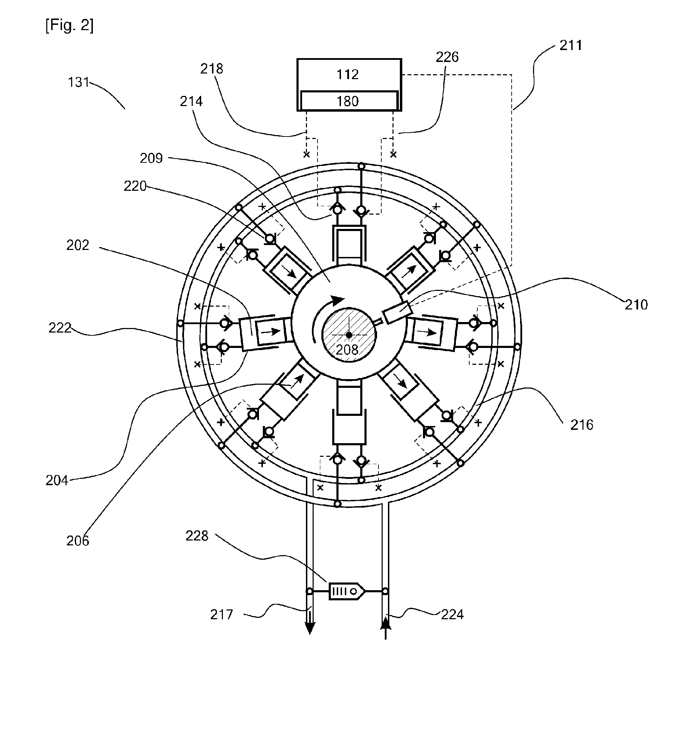

Figure 2 illustrates the hydraulic motor (131) in the form of a electronically commutated hydraulic motor comprising a plurality of working chambers (202, designated individually by letters A to H) which have volumes defined by the interior surfaces of cylinders (204) and pistons (206) which are driven from a rotatable shaft (208) by an eccentric cam (209) and which reciprocate within the cylinders to cyclically vary the volume of the working chambers. The rotatable shaft is firmly connected to and rotates with the generator shaft (159). The hydraulic motor may comprise a plurality of axially-spaced banks of working chambers driven from the same shaft by similarly spaced eccentric cams. A shaft position and speed sensor (210) determines the instantaneous angular position and speed of rotation of the shaft, and through signal line (211, being some of the motor actuation and motor shaft signals 173) informs the controller (112), which enables the controller to determine the instantaneous phase of the cycles of each working chamber.

The working chambers are each associated with Low Pressure Valves (LPVs) in the form of electronically actuated face-sealing poppet valves (214), which face inwards toward their associated working chamber and are operable to selectively seal off a channel extending from the working chamber to a low pressure conduit (216), which functions generally as a net source or sink of fluid in use and may connect one or several working chambers, or indeed all as is shown here, to a low pressure port (217) which is fluidically connected to the low pressure manifold (135) of the WTG. The LPVs are normally open solenoid closed valves which open passively when the pressure within the working chamber is less than or equal to the pressure within the low pressure manifold, i.e. during an intake stroke, to bring the working chamber into fluid communication with the low pressure manifold, but are selectively closable under the active control of the controller via LPV control lines (218, being some of the motor actuation and motor shaft signals 173) to bring the working chamber out of fluid communication with the low pressure manifold. Alternative electronically controllable valves may be employed, such as normally closed solenoid opened valves.

The working chambers are each further associated with High Pressure Valves (HPVs) (220) in the form of pressure actuated delivery valves. The HPVs open outwards from the working chambers and are operable to seal off a channel extending from the working chamber to a high pressure conduit (222), which functions as a net source or sink of fluid in use and may connect one or several working chambers, or indeed all as is shown here, to a high pressure port (224, acting as the inlet of the hydraulic motor) which is in fluid communication with the pressurised fluid line (133). The HPVs function as normally-closed pressure-opening check valves which open passively when the pressure within the working chamber exceeds the pressure within the pressurised fluid line. The HPVs also function as normally-closed solenoid opened check valves which the controller may selectively hold open via HPV control lines (226, being some of the motor actuation and motor shaft signals 173) once that HPV is opened by pressure within the associated working chamber. Typically the HPV is not openable by the controller against pressure in the pressurised fluid line. The HPV may additionally be openable under the control of the controller when there is pressure in the pressurised fluid line but not in the working chamber, or may be partially openable, for example if the valve is of the type and is operated according to the method disclosed in WO 2008/029073 or WO 2010/029358.

In a normal mode of operation described in, for example, EP 0 361 927, EP 0 494 236, and EP 1 537 333, the controller selects the net rate of displacement of fluid from the pressurised fluid line by the hydraulic motor by actively closing one or more of the LPVs shortly before the point of minimum volume in the associated working chamber's cycle, closing the path to the low pressure manifold which causes the fluid in the working chamber to be compressed by the remainder of the contraction stroke. The associated HPV opens when the pressure across it equalises and a small amount of fluid is directed out through the associated HPV. The controller then actively holds open the associated HPV, typically until near the maximum volume in the associated working chamber's cycle, admitting fluid from the pressurised fluid line and applying a torque to the rotatable shaft. In an optional pumping mode the controller selects the net rate of displacement of fluid to the pressurised fluid line by the hydraulic motor by actively closing one or more of the LPVs typically near the point of maximum volume in the associated working chamber's cycle, closing the path to the low pressure manifold and thereby directing fluid out through the associated HPV on the subsequent contraction stroke (but does not actively hold open the HPV). The controller selects the number and sequence of LPV closures and HPV openings to produce a flow or create a shaft torque or power to satisfy a selected net rate of displacement. As well as determining whether or not to close or hold open the LPVs on a cycle by cycle basis, the controller is operable to vary the precise phasing of the closure of the HPVs with respect to the varying working chamber volume and thereby to select the net rate of displacement of fluid from the high pressure to the low pressure manifold or vice versa.

Arrows on the ports (217,224) indicate fluid flow in this motoring mode. A pressure relief valve (228) may protect the hydraulic motor from damage.

Accordingly, during normal operation, the controller can regulate the displacement of the hydraulic motor and hydraulic pump so that the WTG efficiently captures energy from the wind and provides energy to the electricity network by means of the electrical generator.

### (Synchronisation)

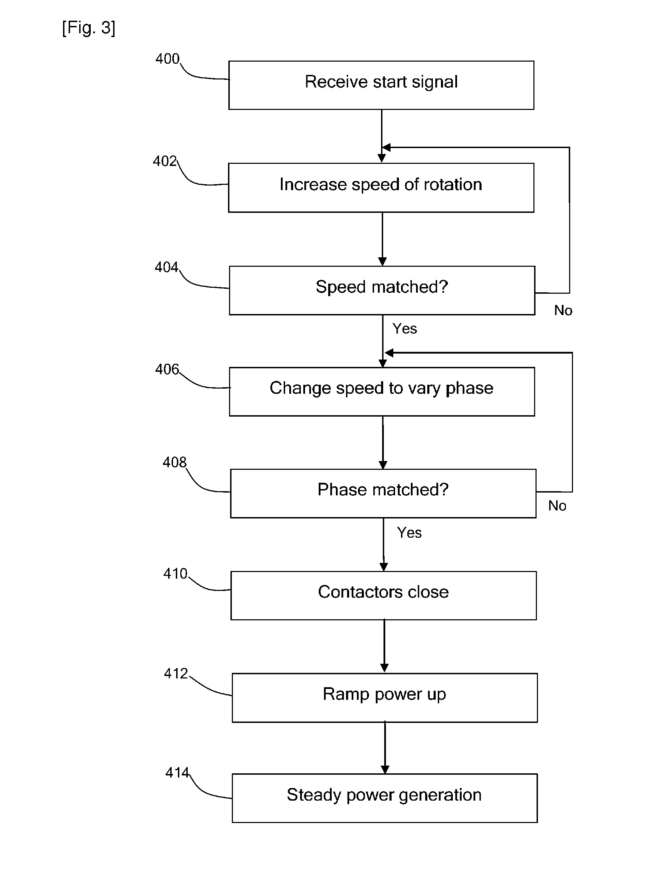

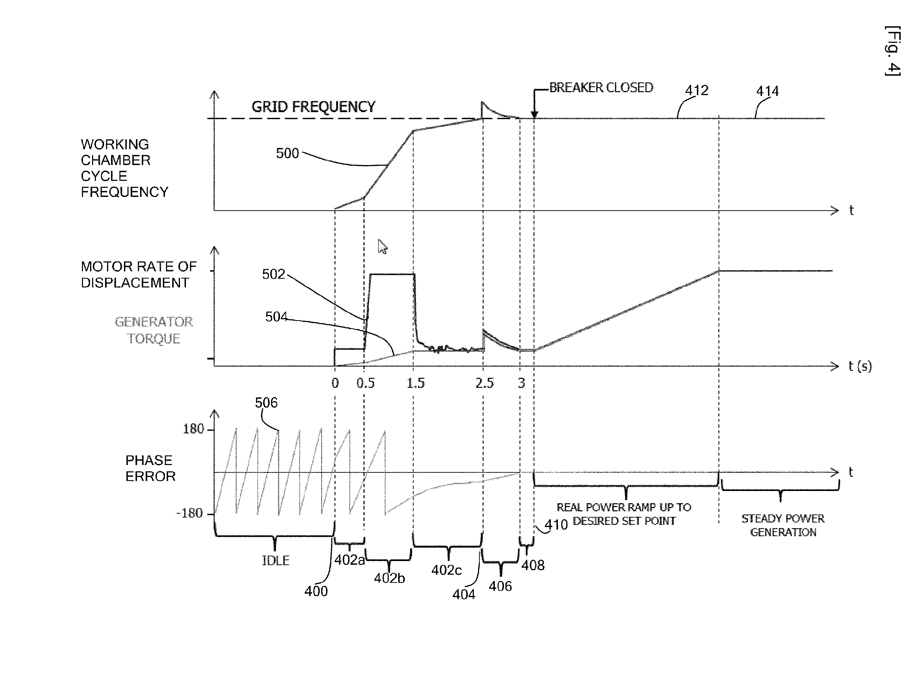

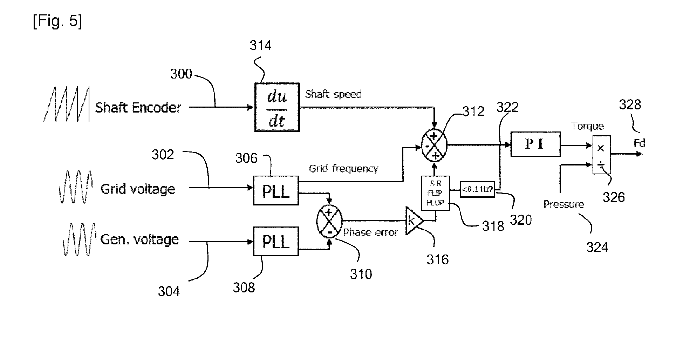

Figure 3 is a schematic diagram of key steps of the synchronisation procedure. Figure 4 illustrates the variation in hydraulic motor working chamber cycle frequency (500), motor and generator torque (502, 504) and phase error (506) during the synchronisation procedure. By phase error we refer to the instantaneous phase difference between the generator output and electricity network phases. Figure 5 is a schematic diagram of a control circuit for controlling the displacement of the hydraulic motor during the synchronisation procedure.

The synchronisation procedure is a procedure which is carried out before electricity is supplied by the generator to the electricity network. Accordingly, when the procedure begins, the contactor (161) is open, so that the generator is electrically isolated from the electrical network. It may be that the hydraulic motor is entirely stationary. Alternatively, it may be operating but at a relatively low displacement.

The synchronisation procedure starts (400) in response to a start signal. Thereafter, the displacement of the motor is increased, to thereby increase (402) the speed of rotation of the rotatable motor shaft and thereby the speed of rotation of the generator shaft. As the speed of rotation increases, the frequency of the electrical output of the generator increases correspondingly. With reference to Figure 4, this step may involve multiple phases. For example, the motor may operate relatively slowly to begin with (402a), and then increase the rate of acceleration (402b) of the rotatable motor and generator shafts. The rate of acceleration of the rotation of the rotatable motor and generator shafts then decreases (402c), as the frequency of the electrical output of the generator approaches that of the electricity network, to avoid overshoot.

Throughout this time, and the remainder of the procedure, the instantaneous pressure in the pressurised fluid line is measured and taken into account when determining the rate of fluid displacement by the motor. A desired torque to be generated by the motor is calculated and this is divided by the instantaneous pressure to determine the required rate of fluid displacement. This can then be used to determine on what fractions of cycles of working chamber volume a discrete portion of pressurised fluid should be received and depressurised to meet the required demand, taking into account the rate of rotation of the motor shaft. Thus, the rate of displacement by the motor is calculated while rejecting variations in pressurised fluid line pressure. This substantially improves the accuracy of control of the torque applied to the generator shaft, facilitating rapid synchronisation.

Once the frequency of the electrical output of the generator and the frequency of the electrical network have been matched (404) to within a predetermined tolerance, the speed of rotation of the rotatable motor shaft (and thereby the speed of rotation of the generator shaft) is slightly changed (406) to vary the phase of the electrical output of the generator relative to that of electricity network. Once the phases have been matched (408), this is detected by the contactor controller, which causes the contactors to close (410) bringing the electrical output of the generator into direct electrical communication with the electricity network. Preferably, there is no intervening voltage converter between the electrical output of the generator and the electricity network, to minimise losses. Once the electrical output of the generator is in direct electrical communication with the electricity network, the frequency of the electricity network effectively dictates the frequency of the generator, although the displacement of hydraulic fluid by the hydraulic motor is still controlled on an ongoing basis, to regulate the electrical power output of the generator, and the phase of the electrical output of the generator relative to the electricity network. Thus, once the contactor has been closed, the power output can be ramped up (412), to a steady state (414).

Figure 5 illustrates a control arrangement for implementing this synchronisation function. This functionality can be implemented, either in electronic circuitry or by a computer executing a computer program. The inputs are a shaft signal (300) from a shaft encoder on the rotatable motor shaft (or generator shaft as the two are coupled), the instantaneous network voltage (302) which is an alternating current signal representing the load voltage, load phase, and load frequency, the instantaneous voltage at the generator output (304) which again represents both voltage and phase, and the measured pressure (324) in the pressurised fluid line.

The network voltage and generator voltage signals are processed by respective phase locked loops (306, 308) and the rotatable shaft rotation frequency is determined by differentiating the shaft encoder signal using a differentiator (314). In some embodiments the output of the shaft encoder will be an integer multiple of the actual frequency of generator output (for example if there are two cycles of working chamber volume per revolution of the rotatable motor shaft) in which case it will need to be scaled appropriately.

The frequency of the network is compared with the rotatable shaft rotation frequency using a comparator (312). Until a further comparator (320) determines that the frequency difference is less than an acceptable tolerance (e.g. 0.1 Hz) the relative phase of the generator output and the network is not taken into account. The difference between the rotatable shaft rotation frequency and the frequency of the network is fed into a proportional integrator (322) which outputs a signal which is representative of the desired to be exerted on the generator shaft by the hydraulic motor. The instantaneous motor displacement signal (328), calculated by a multiplier (326) is proportional to this torque value and inversely proportional to the current pressure (324) in the pressurised fluid line. The amount of hydraulic fluid which is received by the motor working chambers on each cycle of working chamber volume is then selected in dependence on the instantaneous motor displacement signal to thereby cause the hydraulic motor to implement the frequency matching step (402).

Once the frequency of the network and the frequency of the rotatable have been matched to within a predetermined threshold, a flip-flop (318) adds a phase difference signal to the signal fed into the proportional integrator. The phase difference signal is determined by comparing network phase and generator output phase signals output by the two phase locked loops using a comparator (310) and multiplying the difference by a scaling factor k using a multiplier (316).

Accordingly, the proportional integrator (322) responds to the phase difference between the network and the output of the electrical generator and alters the displacement of the hydraulic motor until the phase of the network and the electrical generator output match to within a threshold. The contacter controller typically then automatically detects the synchronisation and closes the contactor, bringing the generator output into electrical communication with the electricity network. Thereafter, the controller (112) increases the displacement of the hydraulic machine to ramp up the power output of the WTG to thereby deliver power to the electricity network.

### (Start-Up)

The electricity generator may be synchronised with the electrical network during operation of the wind turbine generator. For example, a wind turbine generator may have one more electricity generators which it switches on and off periodically to avoid energy wastage keeping generators on when they are not required.

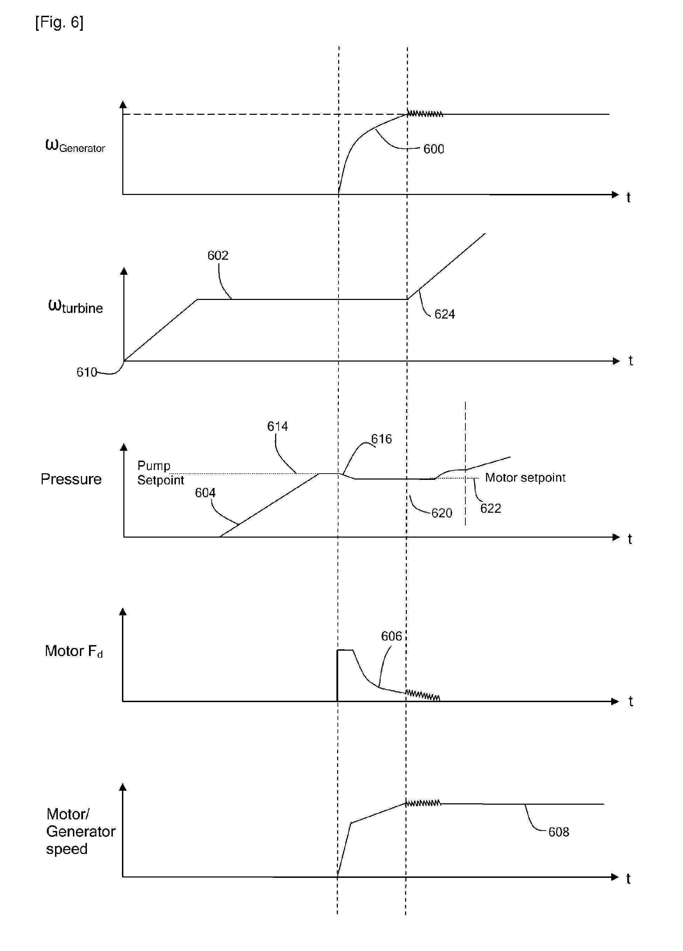

However, synchronisation is important during start-up of a wind turbine generator. Figure 6 illustrates the frequency of the generator output voltage (600), the frequency of rotation of the turbine blades (602), the pressure in the pressurised fluid line (604), the rate of displacement of hydraulic fluid by the hydraulic motor (606) and the speed of rotation of the motor and generator shaft (608) during a start-up sequence.

To start up the turbine, a brake is disengaged and the pitch of the turbine blades is varied to cause the rotor to rotate (610). The displacement of the hydraulic pump is increased, causing the pressure in the pressurised fluid line to increase.

Once the pressure in the pressurised fluid line reaches a pump setpoint value (614), the displacement of the hydraulic pump is then reduced, to avoid excessive pressure in the pressurised fluid line. Thus, during the synchronisation procedure, the pitch of the blades is regulated to maintain a constant speed of rotation of the rotor and the displacement of the hydraulic pump is regulated to keep the pressure in the pressurised fluid line within a suitable range.

The DDP cannot be used to regulate turbine speed until the DDM has synchronised and power flow to the grid is possible. So during the start-up sequence the turbine blade pitch controller operates as a speed controller, to limit speed to a safe start-up speed (eg. 7rpm). This speed is above the normal minimum speed of the turbine.

A synchronisation start signal is generated, the displacement of the hydraulic motor is then increased (from zero) and the synchronisation procedure discussed above begins (616). The torque applied by the motor causes the generator to accelerate, and the motor absorbs flow from the pressurised line. The hydraulic pump pressure controller keeps the pressure in the pressurised fluid line at the pump set-point during the acceleration phase.

The maximum output torque of the hydraulic pump is at all times limited by a Torque-Speed curve, and if the turbine slows down then the maximum pump torque and flow will reduce.

As the motor accelerates the motor flow will increase. If the volume of hydraulic fluid received and depressurised by the motor exceeds the output of the hydraulic pump (e.g. in low-wind conditions) then the system pressure will start to fall below the pump setpoint pressure; in this case the motor displacement will be reduced to maintain system pressure. Furthermore, the rate of displacement of the hydraulic motor is regulated to avoid the pressure in the high pressure line falling below a threshold (labelled motor setpoint (622)). If the pressure fell too low, it would not be possible to continue to speed up the motor and there could be oscillations in the pressure in the high pressure line. Therefore, the rate of displacement of the hydraulic motor is also controlled during synchronisation to avoid the pressure in the pressurised fluid line dropping below the motor setpoint value. If it is detected that an underpressure condition might occur, then the torque applied by the hydraulic motor to the generator is reduced, by reducing the rate of displacement by the hydraulic motor. Usually it will still be possible to complete synchronisation, it will simply take longer.

The motor operates in a speed control mode initially, and the displacement is reduced as the generator accelerates.

As the motor approaches synchronous speed, motor enters phase control mode to match the phase of the grid and the generator rotor.

Once the speed and phase errors are both within the allowed limits, the contactor can be closed and the generator is coupled to the grid.

Once synchronisation is complete (620) and then generator is brought into electrical communication with the electricity network and starts to provide power to the electricity network, the speed of rotation of the turbine blades starts to increase (622), the pressure in the pressurised fluid line increases rapidly and after a period of time the rate of displacement of the hydraulic motor is increased (624) and power generation ramps up.

Indeed, the high pressure line is typically in fluid communication with an accumulator, and is thereby able to temporarily absorb some pressurised fluid, with the pressure in the high pressure line increasing as the amount of hydraulic fluid in the accumulator increases. The accumulator typically has a pre-charge pressure and if the pressure in the pressurised fluid line was to fall below the pre-charge pressure the system would become hydraulically stiff and the pressure in the pressurised fluid line would fall rapidly.

Further variations and modifications may be made within the scope of the invention herein disclosed.

### Reference Signs List

- 100: Wind turbine generator
- 101: Electricity network
- 103: Nacelle
- 105: Tower
- 107: Hub
- 109: Blades
- 110: Rotor
- 111: Anemometer
- 112: Controller
- 113: Measured wind speed signal
- 115: Rotor speed sensor
- 117: Rotor speed signal
- 119: Pitch actuator
- 121: Pitch sensing signals
- 125: Rotor shaft
- 127: Direction of rotor rotation
- 131: Hydraulic motor
- 133: Pressurised fluid line
- 135: Low pressure manifold
- 136: Hydraulic transmission
- 137: Charge pump
- 139: Reservoir
- 141: Low pressure accumulator
- 143: Low pressure relief valve
- 144: Heat exchanger
- 145: Smoothing accumulator
- 147: First high pressure accumulator
- 148: First isolating valve
- 149: Second high pressure accumulator
- 150: Second isolating valve
- 151: First isolating valve signals
- 152: Second isolating valve signals
- 153: Pressure sensor
- 154: Pressurised fluid line pressure signal
- 155: High pressure relief valve
- 157: Synchronous electrical generator
- 159: Generator shaft
- 161: Contactor
- 163: Contactor controller
- 167: Measurements of instantaneous voltage, current and frequency of the electricity supply
- 168: Electricity supply sensors
- 169: Electrical output of generator
- 170: Generator output sensors
- 171: Pump actuation signals
- 173: Motor actuation signals
- 175: Generator and contactor control signals
- 202: Working chambers
- 204: Cylinders
- 206: Pistons
- 208: Rotatable shaft of hydraulic motor
- 209: Eccentric cam
- 210: Shaft position and speed sensor
- 211: Signal line
- 214: Electronically actuated face-sealing poppet valves
- 216: Low pressure conduit
- 217: Low pressure port
- 218: Low pressure valve control lines
- 220: High pressure valves
- 222: High pressure conduit
- 224: High pressure port
- 226: High pressure valve control lines
- 228: Pressure relief valve
- 300: Shaft signal
- 302: Instantaneous network voltage
- 304: Generator output
- 306: Phase locked loop
- 308: Phase locked loop
- 310: Comparator
- 312: Comparator
- 314: Differentiator
- 316: Multiplier
- 320: Comparator
- 324: Measured pressure in pressurised fluid line
- 326: Multiplier
- 328: Instantaneous motor displacement signal
- 400: Start of synchronisation procedure
- 402a, 402b, 402c: Increasing speed of rotation of rotatable motor shaft
- 404: Determining that the frequency of the electrical output of the generator and the frequency of the electrical network have been matched.
- 406: Varying phase
- 408: Determining phases matched
- 410: Closing contactors
- 412: Ramping up power output
- 414: Steady state power output
- 500: Working chamber cycle frequency
- 502: Motor torque
- 504: Generator torque
- 506: Phase error
- 600: Generator output voltage
- 602: Frequency of rotation of turbine blades
- 604: Pressure in pressurised fluid line
- 606: Rate of displacement of hydraulic fluid by hydraulic motor
- 608: Speed of rotation of the motor and generator shaft
- 610: Blade pitch varying
- 614: Pump setpoint value
- 616: Synchronisation procedure begins
- 620: Synchronisation complete
- 622: Motor setpoint valve
- 624: Rate of displacement of hydraulic motor increases.

## Claims

1. A method of synchronising a generator drive with an alternating current electrical network (101), the generator drive comprising a hydraulic motor (131) coupled to a generator (157) having an electrical output for providing electrical power to an alternating current electrical network (101) having a load frequency, load phase and load voltage, the hydraulic motor (131) having a hydraulic input coupled to a source (133) of pressurised hydraulic fluid and one or more working chambers (202) of cyclically varying volume for receiving and depressurising discrete portions of received hydraulic fluid, the volume of pressurised hydraulic fluid received by each working chamber being selectable for each cycle of working chamber volume, said generator drive comprising a controller (112) which selects the volume of the pressurised hydraulic fluid which is received by each working chamber on each cycle of working chamber (202) volume to thereby drive the generator (157), **characterised in that** the generator (157) is initially electrically isolated from the electrical network (101) and the method comprises the step carried out by the controller (112) of receiving a load signal representative of the load frequency and controlling the volume of pressurised fluid received and depressurised by the working chambers (202) on each cycle of working chamber volume to match the frequency of the electrical output of the generator (157) with the load frequency to within a tolerance and then subsequently bringing the electrical output of the generator (157) into electrical communication with the electrical network (101) to thereby provide power to the electrical network (101).

2. A method of synchronising a generator drive with an alternating current electrical network according to claim 1, wherein displacement of said hydraulic motor is controlled to be displacement which is determined based on a difference between a rotatable shaft rotation frequency and said load frequency of the hydraulic motor or the generator as well as on pressure of said pressurised fluid such that said difference between the rotatable shaft rotation frequency and said load frequency is within a tolerance.

3. A method of synchronising a generator drive with an alternating current electrical network (101) according to claim 1, wherein the controller (112) receives a pressure signal indicative of the instantaneous pressure of pressurised fluid received from the source (133) of pressurised fluid and takes the pressure signal into account when selecting the volume of pressurised hydraulic fluid received by each working chamber (202) for each cycle of working chamber volume.

4. A method of synchronising a generator drive with an alternating current electrical network according to claim 2, wherein said displacement of said hydraulic motor is controlled to be displacement which is determined based on a phase difference between the load phase and the phase of the electrical output of the generator in addition to said difference between the rotatable shaft rotation frequency and said load frequency as well as said pressure of the pressurised fluid.

5. A method of synchronising a generator drive with an alternating current electrical network (101) according to claim 2, wherein the method comprises controlling the volume of pressurised fluid received and depressurised by the working chamber (202) on each cycle of working chamber volume to first match the frequency of the electrical output of the generator (157) with the load frequency such that the difference between the rotatable shaft rotation frequency and said load frequency is within the tolerance, and then to also match the phase of the electrical output of the generator (157) with the load phase before the electrical output of the generator (157) is brought into electrical communication with the electrical network (101) to thereby provide power to the electrical network (101).

6. A method of synchronising a generator drive with an alternating current network (101) according to claim 1, wherein the electrical output of the generator (157) is electrically coupled to the electrical network (101) through a contactor (161) and wherein the contactor (161) is initially open to isolate the electrical output of the generator (157) from the electrical network (101) and wherein the step of bringing the electrical output of the generator into electrical communication with the electrical network (101) to thereby provide power to the electrical network (101) comprises closing the contactor (161).

7. A method of synchronising a generator drive with an alternating current network (101) according to claim 1, wherein the hydraulic motor (131) comprises a rotatable shaft (208) and the cycles of working chamber volume are coupled to the angle of the rotatable shaft (208), wherein the method comprises matching the frequency of the electrical output of the generator (157) with the load frequency by controlling the volume of pressurised fluid received and depressurised by the working chambers (202) to increase the speed of rotation of the rotatable shaft (208).

8. A method of synchronising a generator drive with an alternating current network (101) according to claim 1, wherein the method is started responsive to receipt of a start signal through a start signal input.

9. A method of synchronising a generator drive with an alternating current network (101) according to claim 1, further comprising controlling the potential difference across one or more field coils of the generator (157) responsive to the load frequency or load voltage.

10. A method of synchronising a generator drive with an alternating current network (101) according to claim 1, wherein the source of pressurised hydraulic fluid is one or more of a hydraulic fluid store, a hydraulic pump (129) or a hydraulic ram.

11. A method of synchronising a generator drive with an alternating current network (101) according to claim 1, wherein the method comprises increasing the speed of rotation to converge on the speed required to match the frequency of the electrical output of the generator (157) with the load frequency, without exceeding the speed required to match the frequency of the electrical output of the generator (157) until the frequency of the electrical output of the generator (157) has been found to match the load frequency to within the tolerance, and than increasing or decreasing the speed of rotation to match the phase of the electrical output of the generator (157) with the electricity network (101).

12. A method of synchronising a generator drive with an alternative current network (101) according to claim 1, wherein the generator drive is part of a hydraulic transmission (136) in a power generating device of a renewable energy type, the power generating device having an actuated element (110) which is actuated by energy from a renewable energy source, the hydraulic transmission (136) further comprising a hydraulic pump (129) which has a rotatable shaft (125) coupled to the actuated element (110) and which uses renewable energy received through the actuated element (110) and rotatable shaft (125) to pressurise hydraulic fluid and output the pressurised hydraulic fluid to a pressurised fluid line (133) which extends from an output of the hydraulic pump (129) to an input of the hydraulic motor (131), the hydraulic pump (129) and pressurised fluid line (133) thereby functioning as the source of pressurised hydraulic fluid.

13. A method of starting up a power generating device of a renewable energy type, the power generating device comprising a hydraulic transmission (136) and a rotor (110) with one or more blades, the hydraulic transmission (136) comprising: a hydraulic pump (129) which has a rotatable shaft (125) coupled to the rotor (110) and which uses renewable energy received through the rotor (110) and rotatable shaft (125) to pressurise hydraulic fluid and output the pressurised hydraulic fluid to a pressurised fluid line (133); and a generator drive, the generator drive comprising a hydraulic motor (131) coupled to a generator (157) having an electrical output for providing electrical power to an alternating current electrical network (101) having a load frequency, load phase and load voltage, the hydraulic motor (131) having a hydraulic Input coupled to the pressurised fluid line (133), and one or more working chambers (202) of cyclically varying volume for receiving and depressurising discrete portions of received hydraulic fluid, the volume of pressurised hydraulic fluid received by each working chamber (202) being selectable for each cycle of working chamber volume, said generator drive comprising a controller (112) which selects the volume of the pressurised hydraulic fluid which is received by each working chamber (202) on each cycle of working chamber volume to thereby drive the generator (157), **characterised in that** the generator (157) is initially electrically isolated from the electrical network (101) and the method of starting up the power generating device comprises the step of the hydraulic pump (129) receiving energy from the rotor (110) and increasing the pressure of fluid in the pressurised fluid line (133) and then synchronizing the generator (157) with the electrical network (101) by the method of claim 1.

14. A method of starting up a power generating device of a renewable energy type according to claim 13, the power generating device comprising a hydraulic transmission (136) and a rotor (110) with one or more blades (109), wherein the controller (112) receives a pressure signal indicative of the instantaneous pressure of pressurised fluid received from the source (133) of pressurised fluid and takes the pressure signal into account when selecting the volume of pressurised hydraulic fluid received by each working chamber (202) for each cycle of working chamber volume.

15. A method of starting up a power generating device of a renewable energy type according to claim 13, comprising controlling the rate of displacement of the hydraulic pump (129) to maintain the pressure in the high pressure line (133) within a pressure range during the start up procedure.

16. A method of starting up a power generating device of a renewable energy type according to claim 15, wherein the rate of displacement of the hydraulic pump (129) is controlled to increase the pressure in the high pressure line (133) to at least a threshold pressure and then the pitch of the blades (109) is altered to reduce the torque acting on the rotor blades (109).

17. A method of starting up a power generating device of a renewable energy type according to claim 13, wherein the hydraulic motor (131) starts to increase the speed of rotation of the motor rotatable shaft (208) and thereby increase the frequency of the electrical output of the generator (157) only after the pressure in the high pressure line (133) has exceeded a threshold.

18. A generator drive comprising a hydraulic motor coupled to a generator (157) having an electrical output for providing electrical power to an alternating current electrical network (101) having a load frequency, load phase and load voltage, the hydraulic motor (131) having a hydraulic input coupled to a source of pressurised hydraulic fluid (133) and one or more working chambers (202) of cyclically varying volume for receiving and depressurising discrete portions of received hydraulic fluid, the volume of pressurised hydraulic fluid received by each working chamber (202) being selectable for each cycle of working chamber volume, said generator drive comprising a controller (112) which selects the volume of the pressurised hydraulic fluid which is received by each working chamber (202) on each cycle of working chamber volume to thereby drive the generator (157), **characterised in that** the generator drive controller (112) is configured (e.g. programmed) to cause the generator drive to synchronise the electrical output of the generator (157) with the electrical network (101) and to bring the electrical output of the generator (157) into electrical communication with the electrical network (101) by the method of claim 1.

19. A computer readable medium storing program code which, when executed on a computer causes the computer to function as the controller (112) of the generator drive of claim 18.

20. Power generating apparatus of a renewable energy type comprising a hydraulic transmission (136) and a rotor (110) with one or more blades (109), the hydraulic transmission (136) comprising: a hydraulic pump (129) which has a rotatable shaft (125) coupled to the rotor (110) and which uses renewable energy received through the rotor (110) and rotatable shaft (125) to pressurise hydraulic fluid and output the pressurised hydraulic fluid to a pressurised fluid line (133); and a generator drive according to claim 18, **characterised in that** the power generating apparatus is programmed to start up by the method of claim 13.

21. Power generating apparatus of a renewable energy type according to claim 20, wherein the power generating apparatus is a wind turbine generator (100).

## Patentansprüche

1. Verfahren zum Synchronisieren eines Generatorantriebs mit einem elektrischen Wechselstromnetz (101), wobei der Generatorantrieb einen Hydraulikmotor (131) umfasst, der an einen Generator (157) mit einem elektrischen Ausgang gekoppelt ist, um elektrische Energie für ein elektrisches Wechselstromnetz (101) mit einer Ladefrequenz, Ladephase und Ladespannung bereitzustellen, wobei der Hydraulikmotor (131) einen hydraulischen Eingang, der mit einer Quelle (133) von druckbeaufschlagter Hydraulikflüssigkeit verbunden ist, und eine oder mehrere Förderkammer(n) (202) mit zyklisch variierendem Volumen zum Aufnehmen und Druckentlasten diskreter Teile der aufgenommenen Hydraulikflüssigkeit aufweist, wobei das Volumen der druckbeaufschlagten Hydraulikflüssigkeit, das von jeder Förderkammer aufgenommen wird, für jeden Zyklus des Förderkammervolumens auswählbar ist, wobei der Generatorantrieb eine Steuerung (112) umfasst, die das Volumen der druckbeaufschlagten Hydraulikflüssigkeit auswählt, das von jeder Förderkammer bei jedem Zyklus des Volumens der Förderkammer (202) aufgenommen wird, um dadurch den Generator (157) anzutreiben, **dadurch gekennzeichnet, dass** der Generator (157) anfänglich elektrisch gegen das elektrische Netz (101) isoliert ist und das Verfahren den von der Steuerung (112) durchgeführten Schritt des Empfangens eines Ladesignals, das die Ladefrequenz repräsentiert, und des Regelns des Volumens der druckbeaufschlagten Flüssigkeit, das von den Förderkammern (202) bei jedem Zyklus des Förderkammervolumens aufgenommen und druckentlastet wird, umfasst, um die Frequenz des elektrischen Ausgangs des Generators (157) innerhalb einer Toleranz an die Ladefrequenz anzupassen und anschließend den elektrischen Ausgang des Generators (157) elektrisch mit dem elektrischen Netz (101) zu verbinden, um dadurch das elektrische Netz (101) mit Strom zu versorgen.

2. Verfahren zum Synchronisieren eines Generatorantriebs mit einem elektrischen Wechselstromnetz gemäß Anspruch 1, wobei die Verdrängung des Hydraulikmotors dahingehend geregelt wird, dass sie einer Verdrängung entspricht, die auf der Grundlage einer Differenz zwischen einer Rotationsfrequenz einer drehbaren Welle und der Ladefrequenz des Hydraulikmotors oder des Generators sowie des Drucks der druckbeaufschlagten Flüssigkeit so bestimmt wird, dass die Differenz zwischen der Rotationsfrequenz der drehbaren Welle und der Ladefrequenz innerhalb einer Toleranz liegt.

3. Verfahren zum Synchronisieren eines Generatorantriebs mit einem elektrischen Wechselstromnetz (101) gemäß Anspruch 1, wobei die Steuerung (112) ein Drucksignal empfängt, das den momentanen Druck der druckbeaufschlagten Flüssigkeit anzeigt, die von der Quelle (133) der druckbeaufschlagten Flüssigkeit aufgenommen wird, und das Drucksignal beim Auswählen des Volumens der druckbeaufschlagten Hydraulikflüssigkeit, das von jeder Förderkammer (202) aufgenommen wird, für jeden Zyklus des Förderkammervolumens berücksichtigt.

4. Verfahren zum Synchronisieren eines Generatorantriebs mit einem elektrischen Wechselstromnetz gemäß Anspruch 2, wobei die Verdrängung des Hydraulikmotors dahingehend geregelt wird, dass sie einer Verdrängung entspricht, die auf der Grundlage einer Phasendifferenz zwischen der Ladephase und der Phase des elektrischen Ausgangs des Generators zusätzlich zu der Differenz zwischen der Rotationsfrequenz der drehbaren Welle und der Ladefrequenz sowie dem Druck der druckbeaufschlagten Flüssigkeit bestimmt wird.

5. Verfahren zum Synchronisieren eines Generatorantriebs mit einem elektrischen Wechselstromnetz (101) gemäß Anspruch 2, wobei das Verfahren das Regeln des Volumens der druckbeaufschlagten Flüssigkeit umfasst, das von der Förderkammer (202) bei jedem Zyklus des Förderkammervolumens aufgenommen und druckentlastet wird, um zunächst die Frequenz des elektrischen Ausgangs des Generators (157) an die Ladefrequenz so anzupassen, dass die Differenz zwischen der Rotationsfrequenz der drehbaren Welle und der Ladefrequenz innerhalb einer Toleranz liegt, und dann auch die Phase des elektrischen Ausgangs des Generators (157) an die Ladephase anzupassen, bevor der elektrische Ausgang des Generators (157) elektrisch mit dem elektrischen Netz (101) verbunden wird, um dadurch Strom für das elektrische Netz (101) bereitzustellen.

6. Verfahren zum Synchronisieren eines Generatorantriebs mit einem Wechselstromnetz (101) gemäß Anspruch 1, wobei der elektrische Ausgang des Generators (157) elektrisch mit dem elektrischen Netz (101) über einen Kontaktgeber (161) verbunden ist und wobei der Kontaktgeber (161) anfänglich geöffnet ist, um den elektrischen Ausgang des Generators (157) von dem elektrischen Netz (101) zu trennen, und wobei der Schritt, den elektrischen Ausgang des Generators elektrisch mit dem elektrischen Netz (101) zu verbinden, um dadurch Strom für das elektrische Netz (101) bereitzustellen, das Schließen des Kontaktgebers (161) umfasst.

7. Verfahren zum Synchronisieren eines Generatorantriebs mit einem Wechselstromnetz (101) gemäß Anspruch 1, wobei der Hydraulikmotor (131) eine drehbare Welle (208) umfasst und die Zyklen des Förderkammervolumens an den Winkel der drehbaren Welle (208) gekoppelt sind, wobei das Verfahren das Anpassen der Frequenz des elektrischen Ausgangs des Generators (157) an die Ladefrequenz durch Regeln des Volumens der druckbeaufschlagten Flüssigkeit, das von den Förderkammern (202) aufgenommen und druckentlastet wird, umfasst, um die Rotationsgeschwindigkeit der drehbaren Welle (208) zu erhöhen.

8. Verfahren zum Synchronisieren eines Generatorantriebs mit einem Wechselstromnetz (101) gemäß Anspruch 1, wobei das Verfahren in Reaktion auf den Empfang eines Startsignals durch einen Startsignaleingang eingeleitet wird.

9. Verfahren zum Synchronisieren eines Generatorantriebs mit einem Wechselstromnetz (101) gemäß Anspruch 1, ferner umfassend das Regeln des Potenzialunterschieds über eine oder mehrere Feldspule(n) des Generators (157) in Reaktion auf die Ladefrequenz oder Ladespannung.

10. Verfahren zum Synchronisieren eines Generatorantriebs mit einem Wechselstromnetz (101) gemäß Anspruch 1, wobei die Quelle der druckbeaufschlagten Hydraulikflüssigkeit eins oder mehrere von einem Hydraulikflüssigkeitsspeicher, einer Hydraulikpumpe (129) oder einem Hydraulikzylinder ist.

11. Verfahren zum Synchronisieren eines Generatorantriebs mit einem Wechselstromnetz (101) gemäß Anspruch 1, wobei das Verfahren umfasst, die Rotationsgeschwindigkeit zu erhöhen, um sich der Geschwindigkeit anzunähern, die erforderlich ist, um die Frequenz des elektrischen Ausgangs des Generators (157) an die Ladefrequenz anzupassen, ohne die Geschwindigkeit zu überschreiten, die erforderlich ist, um die Frequenz des elektrischen Ausgangs des Generators (157) anzupassen, bis festgestellt wurde, dass die Frequenz des elektrischen Ausgangs des Generators (157) innerhalb der Toleranz der Ladefrequenz entspricht, und anschließend die Rotationsgeschwindigkeit zu erhöhen oder zu verringern, um die Phase des elektrischen Ausgangs des Generators (157) an das Stromnetz (101) anzugleichen.

12. Verfahren zum Synchronisieren eines Generatorantriebs mit einem Wechselstromnetz (101) gemäß Anspruch 1, wobei der Generatorantrieb Teil eines Hydraulikgetriebes (136) in einer Stromerzeugungsvorrichtung eines Typs für erneuerbare Energie ist, wobei die Stromerzeugungsvorrichtung ein betätigtes Element (110) aufweist, das durch Energie von einer erneuerbaren Energiequelle betätigt wird, wobei das Hydraulikgetriebe (136) ferner eine Hydraulikpumpe (129) umfasst, die eine drehbare Welle (125) aufweist, die mit dem betätigten Element (110) verbunden ist und die mit erneuerbarer Energie arbeitet, die über das betätigte Element (110) und die drehbare Welle (125) aufgenommen wird, um die Hydraulikflüssigkeit mit Druck zu beaufschlagen und die druckbeaufschlagte Hydraulikflüssigkeit an eine Druckleitung (133) zu leiten, die von einem Ausgang der Hydraulikpumpe (129) zu einem Eingang des Hydraulikmotors (131) verläuft, wobei die Hydraulikpumpe (129) und die Druckleitung (133) dadurch als die Quelle der druckbeaufschlagten Hydraulikflüssigkeit fungieren.

13. Verfahren zur Inbetriebnahme einer Stromerzeugungsvorrichtung eines Typs für erneuerbare Energie, wobei die Stromerzeugungsvorrichtung ein Hydraulikgetriebe (136) und einen Rotor (110) mit einem Blatt oder mehreren Blättern umfasst, wobei das Hydraulikgetriebe (136) umfasst: eine Hydraulikpumpe (129), die eine drehbare Welle (125) aufweist, die an den Rotor (110) gekoppelt ist und die mit erneuerbarer Energie, die über den Rotor (110) und die drehbare Welle (125) bezogen wird, arbeitet, um Hydraulikflüssigkeit mit Druck zu beaufschlagen und die druckbeaufschlagte Hydraulikflüssigkeit an eine Druckleitung (133) zu leiten, und einen Generatorantrieb, wobei der Generatorantrieb einen Hydraulikmotor (131) umfasst, der an einen Generator (157) mit einem elektrischen Ausgang zum Bereitstellen elektrischer Energie an ein elektrisches Wechselstromnetz (101) mit einer Ladefrequenz, Ladephase und Ladespannung gekoppelt ist, wobei der Hydraulikmotor (131) einen hydraulischen Eingang, der an die Druckleitung (133) gekoppelt ist, und eine oder mehrere Förderkammer(n) (202) mit zyklisch variierendem Volumen zum Aufnehmen und Druckentlasten diskreter Teile der aufgenommenen Hydraulikflüssigkeit aufweist, wobei das Volumen der druckbeaufschlagten Hydraulikflüssigkeit, das von jeder Förderkammer (202) aufgenommen wird, für jeden Zyklus des Förderkammervolumens wählbar ist, wobei der Generatorantrieb eine Steuerung (112) umfasst, die das Volumen der druckbeaufschlagten Hydraulikflüssigkeit, das von jeder Förderkammer (202) aufgenommen wird, bei jedem Zyklus des Förderkammervolumens auswählt, um dadurch den Generator (157) anzutreiben, **dadurch gekennzeichnet, dass** der Generator (157) anfänglich elektrisch gegen das elektrische Netz (101) isoliert ist, und das Verfahren zur Inbetriebnahme der Stromerzeugungsvorrichtung den Schritt umfasst, dass die Hydraulikpumpe (129) Energie von dem Rotor (110) bezieht und der Druck der Flüssigkeit in der Druckleitung (133) erhöht und dann der Generator (157) mittels des Verfahrens von Anspruch 1 mit dem elektrischen Netz (101) synchronisiert wird.

14. Verfahren zur Inbetriebnahme einer Stromerzeugungsvorrichtung eines Typs für erneuerbare Energie gemäß Anspruch 13, wobei die Stromerzeugungsvorrichtung ein Hydraulikgetriebe (136) und einen Rotor (110) mit einem Blatt oder mehreren Blättern (109) umfasst, wobei die Steuerung (112) ein Drucksignal empfängt, das den momentanen Druck der druckbeaufschlagten Flüssigkeit anzeigt, die von der Quelle (133) von druckbeaufschlagter Flüssigkeit aufgenommen wird, und das Drucksignal beim Auswählen des Volumens der druckbeaufschlagten Hydraulikflüssigkeit, das von jeder Förderkammer (202) aufgenommen wird, für jeden Zyklus des Förderkammervolumens berücksichtigt.

15. Verfahren zur Inbetriebnahme einer Stromerzeugungsvorrichtung eines Typs für erneuerbare Energie gemäß Anspruch 13, das das Regeln der Verdrängungsrate der Hydraulikpumpe (129) umfasst, um den Druck in der Hochdruckleitung (133) während der Inbetriebnahme innerhalb eines Druckbereichs zu halten.

16. Verfahren zur Inbetriebnahme einer Stromerzeugungsvorrichtung eines Typs für erneuerbare Energie gemäß Anspruch 15, wobei die Verdrängungsrate der Hydraulikpumpe (129) geregelt wird, um den Druck in der Hochdruckleitung (133) wenigstens bis zu einem Druckschwellwert zu erhöhen und dann der Einstellwinkel der Blätter (109) geändert wird, um das auf die Rotorblätter (109) wirkende Drehmoment zu vermindern.

17. Verfahren zur Inbetriebnahme einer Stromerzeugungsvorrichtung eines Typs für erneuerbare Energie gemäß Anspruch 13, wobei der Hydraulikmotor (131) beginnt, die Rotationsgeschwindigkeit der drehbaren Welle (208) des Motors zu erhöhen und dadurch die Frequenz des elektrischen Ausgangs des Generators (157) erst dann zu erhöhen, wenn der Druck in der Hochdruckleitung (133) einen Schwellwert überschritten hat.

18. Generatorantrieb, der einen Hydraulikmotor umfasst, der an einen Generator (157) mit einem elektrischen Ausgang zum Bereitstellen elektrischer Energie für ein elektrisches Wechselstromnetz (101) mit einer Ladefrequenz, Ladephase und Ladespannung gekoppelt ist, wobei der Hydraulikmotor (131) einen hydraulischen Eingang, der mit einer Quelle von druckbeaufschlagter Hydraulikflüssigkeit (133) verbunden ist, und eine oder mehrere Förderkammer(n) (202) mit zyklisch variierendem Volumen zum Aufnehmen und Druckentlasten diskreter Teile aufgenommener Hydraulikflüssigkeit aufweist, wobei das Volumen der druckbeaufschlagten Hydraulikflüssigkeit, das von jeder Förderkammer (202) aufgenommen wird, für jeden Zyklus des Förderkammervolumens wählbar ist, wobei der Generatorantrieb eine Steuerung (112) umfasst, die das Volumen der druckbeaufschlagten Hydraulikflüssigkeit, das von jeder Förderkammer (202) aufgenommen wird, bei jedem Zyklus des Förderkammervolumens auswählt, um dadurch den Generator (157) anzutreiben, **dadurch gekennzeichnet, dass** die Steuerung (112) des Generatorantriebs dafür ausgelegt (z.B. programmiert) ist, zu bewirken, dass der Generatorantrieb den elektrischen Ausgang des Generators (157) mit dem elektrischen Netz (101) synchronisiert und mittels des Verfahrens von Anspruch 1 den elektrischen Ausgang des Generators (157) in elektrische Verbindung mit dem elektrischen Netz (101) bringt.

19. Computerlesbares Medium, auf dem ein Programmcode gespeichert ist, der, wenn er auf einem Computer ausgeführt wird, bewirkt, dass der Computer als die Steuerung (112) des Generatorantriebs von Anspruch 18 fungiert.

20. Stromerzeugungsvorrichtung eines Typs für erneuerbare Energie, die ein Hydraulikgetriebe (136) und einen Rotor (110) mit einem Blatt oder mehreren Blättern (109) umfasst, wobei das Hydraulikgetriebe (136) umfasst: eine Hydraulikpumpe (129) mit einer drehbaren Welle (125), die an den Rotor (110) gekoppelt ist und mit erneuerbarer Energie arbeitet, die über den Rotor (110) und die drehbare Welle (125) aufgenommen wird, um die Hydraulikflüssigkeit mit Druck zu beaufschlagen und die druckbeaufschlagte Hydraulikflüssigkeit an eine Druckleitung (133) zu leiten; und einen Generatorantrieb gemäß Anspruch 18, **dadurch gekennzeichnet, dass** die Stromerzeugungsvorrichtung programmiert ist, mittels des Verfahrens von Anspruch 13 anzulaufen.

21. Stromerzeugungsvorrichtung eines Typs für erneuerbare Energie gemäß Anspruch 20, wobei die Stromerzeugungsvorrichtung eine Windkraftanlage (100) ist.

## Revendications

1. Procédé de synchronisation d'un entraînement de générateur avec un réseau électrique à courant alternatif (101), l'entraînement de générateur comprenant un moteur hydraulique (131) couplé à un générateur (157) pourvu d'une sortie électrique destinée à fournir de la puissance électrique à un réseau électrique à courant alternatif (101) possédant une fréquence de charge, une phase de charge et une tension de charge, le moteur hydraulique (131) étant pourvu d'une entrée hydraulique couplée à une source (133) de fluide hydraulique sous pression et d'une ou de plusieurs chambres de travail (202) de volume variable cycliquement destinées à recevoir et à mettre hors pression des parties discrètes de fluide hydraulique reçu, le volume de fluide hydraulique sous pression reçu par chaque chambre de travail étant sélectionnable pour chaque cycle de volume de chambre de travail, ledit entraînement de générateur comprenant une unité de commande (112) qui sélectionne le volume du fluide hydraulique sous pression qui est reçu par chaque chambre de travail à chaque cycle de volume de chambre de travail (202) de manière à entraîner le générateur (157), le procédé étant **caractérisé en ce que** le générateur (157) est initialement isolé électriquement du réseau électrique (101) et **en ce qu'**il comprend l'étape, mise en oeuvre par l'unité de commande (112), de réception d'un signal de charge représentant la fréquence de charge et de régulation du volume de fluide sous pression reçu et mis hors pression par les chambres de travail (202) à chaque cycle de volume de chambre de travail dans le but d'adapter la fréquence de la sortie électrique du générateur (157) à la fréquence de charge à une tolérance près, puis l'étape de mise en liaison électrique consécutive de la sortie électrique du générateur (157) avec le réseau électrique (101) de manière à fournir de la puissance au réseau électrique (101).

2. Procédé de synchronisation d'un entraînement de générateur avec un réseau électrique à courant alternatif selon la revendication 1, dans lequel la cylindrée dudit moteur hydraulique est régulée pour correspondre à une cylindrée établie en fonction d'une différence entre une fréquence de rotation d'arbre rotatif et ladite fréquence de charge du moteur hydraulique ou du générateur ainsi que d'une pression dudit fluide sous pression de sorte que ladite différence entre la fréquence de rotation d'arbre rotatif et ladite fréquence de charge s'inscrive dans une tolérance.

3. Procédé de synchronisation d'un entraînement de générateur avec un réseau électrique à courant alternatif (101) selon la revendication 1, dans lequel l'unité de commande (112) reçoit un signal de pression indiquant la pression instantanée de fluide sous pression reçu depuis la source (133) de fluide sous pression et prend en compte le signal de pression lors de la sélection du volume de fluide hydraulique sous pression reçu par chaque chambre de travail (202) pour chaque cycle de volume de chambre de travail.

4. Procédé de synchronisation d'un entraînement de générateur avec un réseau électrique à courant alternatif selon la revendication 2, dans lequel ladite cylindrée dudit moteur hydraulique est régulée pour correspondre à une cylindrée établie en fonction d'une différence de phase entre la phase de charge et la phase de la sortie électrique du générateur en plus de ladite différence entre la fréquence de rotation d'arbre rotatif et ladite fréquence de charge ainsi que de ladite pression du fluide sous pression.

5. Procédé de synchronisation d'un entraînement de générateur avec un réseau électrique à courant alternatif (101) selon la revendication 2, lequel procédé comprend la régulation du volume de fluide sous pression reçu et mis hors pression par la chambre de travail (202) à chaque cycle de volume de chambre de travail dans le but d'adapter tout d'abord la fréquence de la sortie électrique du générateur (157) à la fréquence charge de sorte que la différence entre la fréquence de rotation d'arbre rotatif et ladite fréquence de charge s'inscrive dans la tolérance, puis d'adapter également la phase de la sortie électrique du générateur (157) à la phase de charge avant la mise en liaison électrique de la sortie électrique du générateur (157) avec le réseau électrique (101) de manière à fournir de la puissance au réseau électrique (101).

6. Procédé de synchronisation d'un entraînement de générateur avec un réseau à courant alternatif (101) selon la revendication 1, dans lequel la sortie électrique du générateur (157) est couplée électriquement au réseau électrique (101) par le biais d'un contacteur (161), et dans lequel le contacteur (161) est initialement ouvert afin d'isoler la sortie électrique du générateur (157) du réseau électrique (101), et dans lequel l'étape de mise en liaison électrique de la sortie électrique du générateur avec le réseau électrique (101) de manière à fournir de la puissance au réseau électrique (101) comprend la fermeture du contacteur (161).

7. Procédé de synchronisation d'un entraînement de générateur avec un réseau à courant alternatif (101) selon la revendication 1, dans lequel le moteur hydraulique (131) comprend un arbre rotatif (208) et les cycles de volume de chambre de travail sont couplés à l'angle de l'arbre rotatif (208), lequel procédé comprend l'adaptation de la fréquence de la sortie électrique du générateur (157) à la fréquence de charge par régulation du volume de fluide sous pression reçu et mis hors pression par les chambres de travail (202) afin d'accroître la vitesse de rotation de l'arbre rotatif (208).

8. Procédé de synchronisation d'un entraînement de générateur avec un réseau à courant alternatif (101) selon la revendication 1, lequel procédé démarre en réponse à la réception d'un signal de démarrage appliqué à une entrée de signal de démarrage.

9. Procédé de synchronisation d'un entraînement de générateur avec un réseau à courant alternatif (101) selon la revendication 1, comprenant en outre la régulation d'une différence de potentiel aux bornes d'une ou de plusieurs bobines de champ du générateur (157) en réponse à la fréquence de charge ou à la tension de charge.

10. Procédé de synchronisation d'un entraînement de générateur avec un réseau à courant alternatif (101) selon la revendication 1, dans lequel la source de fluide hydraulique sous pression est au moins une source dans le groupe constitué par un réservoir de fluide hydraulique, une pompe hydraulique (129) et un bélier hydraulique.

11. Procédé de synchronisation d'un entraînement de générateur avec un réseau à courant alternatif (101) selon la revendication 1, lequel procédé comprend l'accroissement de la vitesse de rotation pour la faire converger vers la vitesse requise pour adapter la fréquence de la sortie électrique du générateur (157) à la fréquence de charge, sans dépasser la vitesse requise pour adapter la fréquence de la sortie électrique du générateur (157), jusqu'à ce que la fréquence de la sortie électrique du générateur (157) se trouve adaptée à la fréquence de charge à la tolérance près, suivi de l'accroissement ou de la réduction de la vitesse de rotation pour adapter la phase de la sortie électrique du générateur (157) au réseau électrique (101).

12. Procédé de synchronisation d'un entraînement de générateur avec un réseau à courant alternatif (101) selon la revendication 1, dans lequel l'entraînement de générateur fait partie d'une transmission hydraulique (136) dans un dispositif générateur de puissance du type à énergie renouvelable, le dispositif générateur de puissance comprenant un élément actionné (110) qui est actionné par l'énergie issue d'une source d'énergie renouvelable, la transmission hydraulique (136) comprenant en outre une pompe hydraulique (129) pourvue d'un arbre rotatif (125) couplé à l'élément actionné (110) et utilisant l'énergie renouvelable reçue par le biais de l'élément actionné (110) et de l'arbre rotatif (125) pour mettre sous pression du fluide hydraulique et refouler le fluide hydraulique sous pression dans une conduite de fluide sous pression (133) qui s'étend d'une sortie de la pompe hydraulique (129) à une entrée du moteur hydraulique (131), la pompe hydraulique (129) et la conduite de fluide sous pression (133) jouant ainsi le rôle de la source de fluide hydraulique sous pression.

13. Procédé de démarrage d'un dispositif générateur de puissance du type à énergie renouvelable, le dispositif générateur de puissance comprenant une transmission hydraulique (136) et un rotor (110) pourvu d'une ou de plusieurs pales, la transmission hydraulique (136) comprenant : une pompe hydraulique (129) pourvue d'un arbre rotatif (125) couplé au rotor (110) et utilisant l'énergie renouvelable reçue par le biais du rotor (110) et de l'arbre rotatif (125) pour mettre sous pression du fluide hydraulique et refouler le fluide hydraulique sous pression dans une conduite de fluide sous pression (133) ; et un entraînement de générateur, l'entraînement de générateur comprenant un moteur hydraulique (131) couplé à un générateur (157) pourvu d'une sortie électrique destinée à fournir de la puissance électrique à un réseau électrique à courant alternatif (101) possédant une fréquence de charge, une phase de charge et une tension de charge, le moteur hydraulique (131) étant pourvu d'une entrée hydraulique couplée à la conduite de fluide sous pression (133) et d'une ou de plusieurs chambres de travail (202) de volume variable cycliquement destinées à recevoir et à mettre hors pression des parties discrètes du fluide hydraulique reçu, le volume de fluide hydraulique sous pression reçu par chaque chambre de travail (202) étant sélectionnable pour chaque cycle de volume de chambre de travail, ledit entraînement de générateur comprenant une unité de commande (112) qui sélectionne le volume du fluide hydraulique sous pression qui est reçu par chaque chambre de travail (202) à chaque cycle de volume de chambre de travail de manière à entraîner le générateur (157), le procédé de démarrage du dispositif générateur de puissance étant **caractérisé en ce que** le générateur (157) est initialement isolé électriquement du réseau électrique (101) et **en ce qu'**il comprend l'étape de réception, par la pompe hydraulique (129), d'énergie issue du rotor (110) et d'accroissement de la pression de fluide dans la conduite de fluide sous pression (133) puis l'étape de synchronisation du générateur (157) avec le réseau électrique (101) au moyen du procédé selon la revendication 1.

14. Procédé de démarrage d'un dispositif générateur de puissance du type à énergie renouvelable selon la revendication 13, le dispositif générateur de puissance comprenant une transmission hydraulique (136) et un rotor (110) pourvu d'une ou de plusieurs pales (109), dans lequel l'unité de commande (112) reçoit un signal de pression indiquant la pression instantanée de fluide sous pression reçu depuis la source (133) de fluide sous pression et prend en compte le signal de pression lors de la sélection du volume de fluide hydraulique sous pression reçu par chaque chambre de travail (202) pour chaque cycle de volume de chambre de travail.

15. Procédé de démarrage d'un dispositif générateur de puissance du type à énergie renouvelable selon la revendication 13, comprenant la régulation de la cylindrée de la pompe hydraulique (129) dans le but de maintenir la pression dans la conduite à haute pression (133) au sein d'une plage de pression au cours de la procédure de démarrage.

16. Procédé de démarrage d'un dispositif générateur de puissance du type à énergie renouvelable selon la revendication 15, dans lequel la cylindrée de la pompe hydraulique (129) est régulée dans le but d'accroître la pression dans la conduite à haute pression (133) au moins à hauteur d'une pression de seuil puis le pas des pales (109) est modifié dans le but de réduire le couple s'exerçant sur les pales (109) du rotor.

17. Procédé de démarrage d'un dispositif générateur de puissance du type à énergie renouvelable selon la revendication 13, dans lequel le moteur hydraulique (131) commence à accroître la vitesse de rotation de son arbre rotatif (208) et, de ce fait, la fréquence de la sortie électrique du générateur (157), uniquement après que la pression dans la conduite à haute pression (133) a dépassé un seuil.

18. Entraînement de générateur comprenant un moteur hydraulique couplé à un générateur (157) pourvu d'une sortie électrique destinée à fournir de la puissance électrique à un réseau électrique à courant alternatif (101) possédant une fréquence de charge, une phase de charge et une tension de charge, le moteur hydraulique (131) étant pourvu d'une entrée hydraulique couplée à une source (133) de fluide hydraulique sous pression et d'une ou de plusieurs chambres de travail (202) de volume variable cycliquement destinées à recevoir et à mettre hors pression des parties discrètes de fluide hydraulique reçu, le volume de fluide hydraulique sous pression reçu par chaque chambre de travail (202) étant sélectionnable pour chaque cycle de volume de chambre de travail, ledit entraînement de générateur comprenant une unité de commande (112) qui sélectionne le volume du fluide hydraulique sous pression qui est reçu par chaque chambre de travail (202) à chaque cycle de volume de chambre de travail de manière à entraîner le générateur (157), l'entraînement de générateur étant **caractérisé en ce que** son unité de commande (112) est configurée (par ex. programmée) pour l'amener à synchroniser la sortie électrique du générateur (157) avec le réseau électrique (101) et pour mettre la sortie électrique du générateur (157) en liaison électrique avec le réseau électrique (101) au moyen du procédé selon la revendication 1.

19. Support lisible par ordinateur sur lequel est enregistré un code de programme dont l'exécution sur un ordinateur amène l'ordinateur à jouer le rôle de l'unité de commande (112) de l'entraînement de générateur selon la revendication 18.

20. Appareil générateur de puissance du type à énergie renouvelable comprenant une transmission hydraulique (136) et un rotor (110) pourvu d'une ou de plusieurs pales (109), la transmission hydraulique (136) comprenant : une pompe hydraulique (129) pourvue d'un arbre rotatif (125) couplé au rotor (110) et utilisant l'énergie renouvelable reçue par le biais du rotor (110) et de l'arbre rotatif (125) pour mettre sous pression du fluide hydraulique et refouler le fluide hydraulique sous pression dans une conduite de fluide sous pression (133) ; et un entraînement de générateur selon la revendication 18, l'appareil générateur de puissance étant **caractérisé en ce qu'**il est programmé pour démarrer au moyen du procédé selon la revendication 13.

21. Appareil générateur de puissance du type à énergie renouvelable selon la revendication 20, lequel appareil générateur de puissance est un aérogénérateur (100).
